# EUROPEAN PATENT SPECIFICATION

(11) **EP 1 331 141 B1**
(45) Date of publication and mention of the grant of the patent: **27.12.2006**
(21) Application number: 03000595.3
(22) Date of filing: 14.01.2003
(51) Int. Cl.: B60R 21/20

(54) **Fixing method and structure of inflator, and airbag apparatus**
Befestigungsverfahren und Struktur eines Gasgenerators und Luftsackanordnung
Procédé de fixation et structure d'un générateur de gaz, et coussin de sécurité gonflable

(30) Priority: 28.01.2002 JP 2002018687
(43) Date of publication of application: 30.07.2003
(73) Proprietor: TAKATA CORPORATION, Minato-ku, Tokyo 106-8510 (JP)
(72) Inventor: Oka, Hidetomo, Minato-ku, Tokyo 106-8510 (JP); Joujima, Kazuhiko, Minato-ku, Tokyo 106-8510 (JP)
(74) Representative: Banzer, Hans-Jörg

(56) References cited:
- US-A- 5 611 563
- US-A- 5 934 700
- US-B1- 6 299 200

## Description

### [Technical Field of the Invention]

The present invention relates to an inflator holder according to the preamble of claim 1, and to an airbag apparatus comprising this inflator holder.

### [Description of the Related Art]

An airbag apparatus provided in a high-speed movable body such as an automobile comprises a folded airbag, an inflator for inflating the airbag, and a casing for accommodating the airbag and the inflator thereinto. In order to fix the inflator to the casing, the inflator may be accommodated into and fixed to an inflator holder, which is in turn fixed to the casing with bolts.

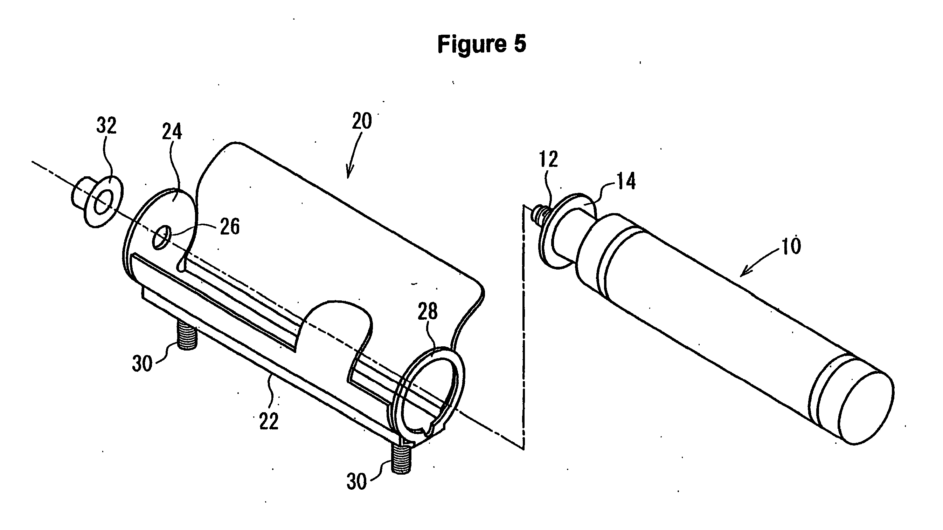

A fixing method of an inflator of such a conventional kind will be described with reference to Fig. 5.

An inflator 10 is substantially cylindrical shaped and has a bolt 12 protruding from one end face thereof. The end face is also provided with a flange 14. Although not shown, there are gas ejection openings provided on the external periphery of the inflator 10.

An inflator holder 20 comprises a substantially half-cylindrical body 22, an end plate 24 erected from one end of the body 22, a bolt through-hole 26 formed on the end plate 24, a ring 28 erected from the other end of the body 22, and stud bolts 30 projectingly arranged from the bottom of the body 22.

The inflator 10 is inserted into the inflator holder 20 passing through the ring 28, so that the bolt 12 is inserted into the bolt through-hole 26 and the flange 14 abuts the end plate 24. By fastening the bolt 12 with a nut 32, the inflator 10 is fixed to the inflator holder 20.

Although not shown, this inflator holder 20 is arranged within a casing of the airbag apparatus and fixed to the casing with the stud bolts 30, which are inserted into bolt through-holes of the casing and fastened with nuts.

US 5934700 discloses an inflator holder according to the preamble of present claim one.

### [Problems to be Solved by the Invention]

In the fixing method and the structure of the inflator shown in Fig. 5, in order to fix the inflator to the inflator holder, it is required to fasten the bolt 12 with a nut 32.

It is an object of the present invention to provide an inflator holder, in which the working efficiency in fixing the inflator is excellent not requiring fastening nuts and the number of parts is also reduced. It is another object of the present invention to provide an airbag apparatus having the structure adopted thereto.

### [Means for Solving the Problems]

According to the present invention, this object is achieved by an inflator holder as defined in claim 1, and an airbag apparatus as defined in claim 4, respectively. The dependent claims define preferred and advantageous embodiments of the invention.

According to the present invention, the first, second, and third press parts are protruding from the internal surface of the inflator holder. By abutting the press parts protruding from the internal surface of the inflator holder in such a manner to the inflator so that only the three points in the peripheral direction abut the external peripheral surface of the inflator, the backlashes of the inflator can be securely prevented.

The airbag apparatus according to the present invention comprises a folded airbag; an inflator for inflating the airbag; and a casing accommodating the airbag and the inflator therein, wherein the inflator is fixed into an inflator holder according to the present invention, and wherein the inflator holder is fixed to the casing of the airbag apparatus.

### [Brief Description of the Drawings]

Fig. 1 is an exploded perspective view for illustrating an embodiment of the invention.
Fig. 2 is a cross-sectional view of an inflator holder along line II-II of Fig. 1.
Fig. 3 is a cross-sectional view of the inflator holder along line III-III of Fig. 2.
Fig. 4 is a cross-sectional view of an airbag apparatus of the invention.
Fig. 5 is an exploded perspective view for showing a conventional example.

### [Description of the Embodiments]

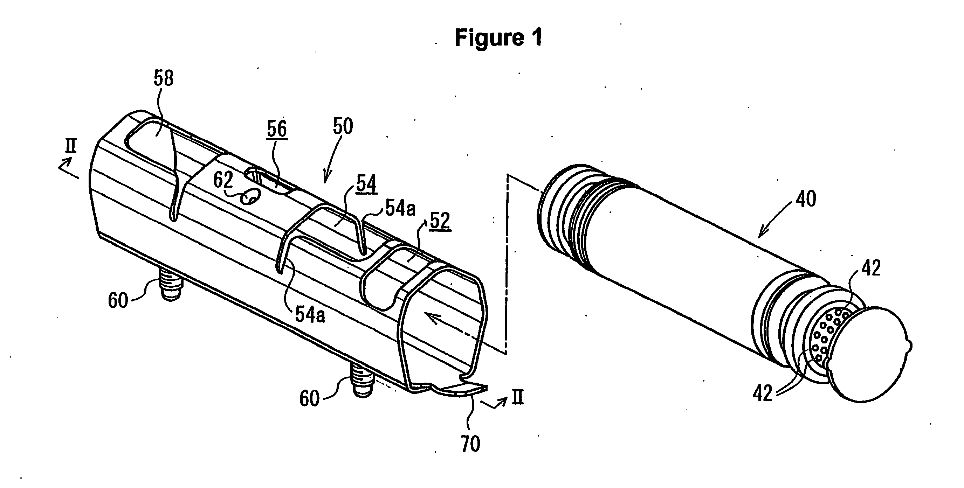

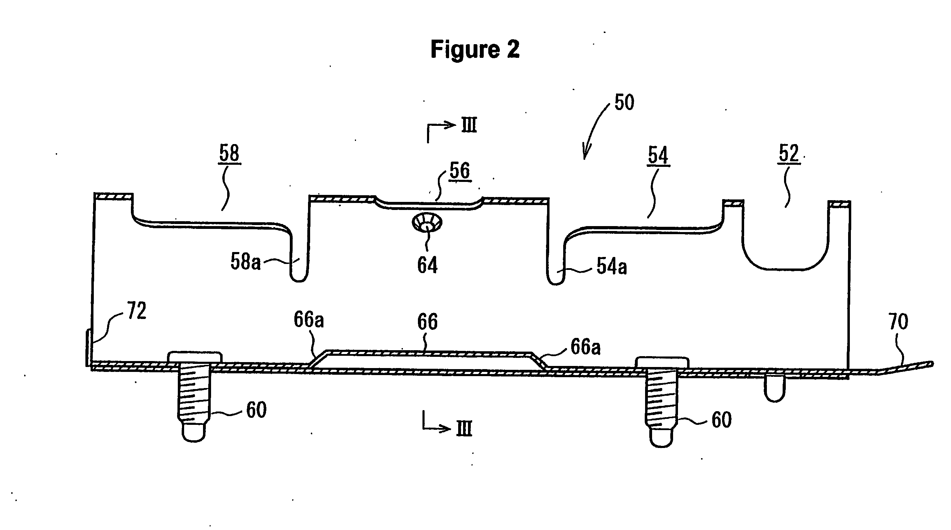

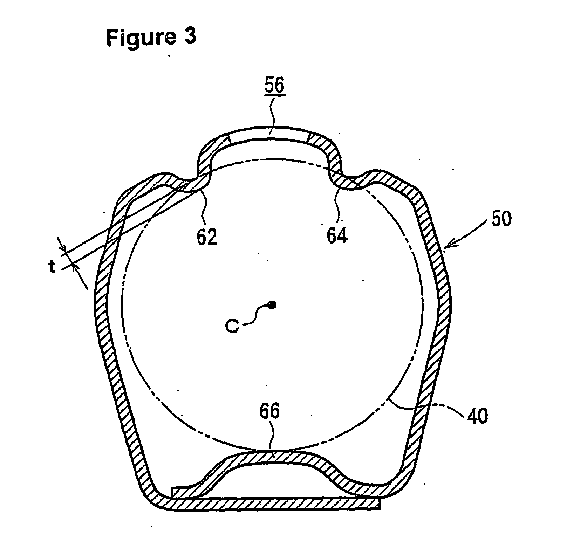

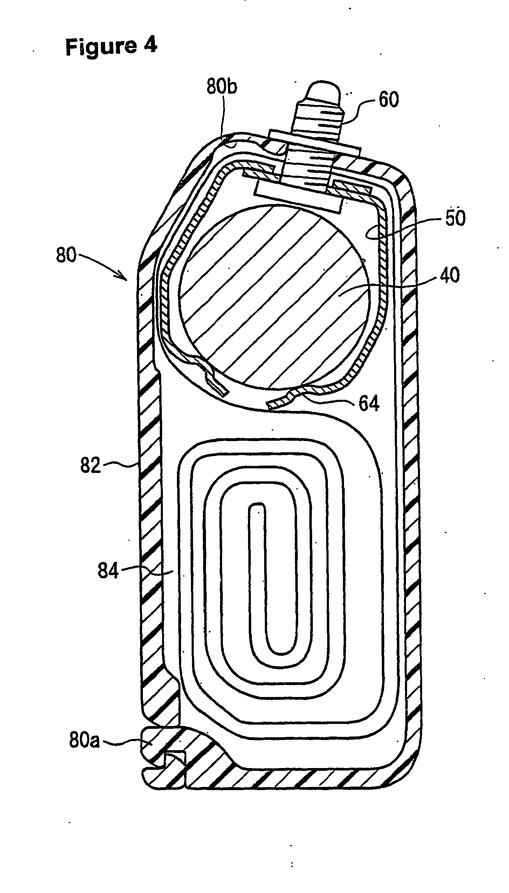

Embodiments will be described below with reference to the drawings. Fig. 1 is an exploded perspective view for illustrating an embodiment; Fig. 2 is a cross-sectional view of an inflator holder along line II-II of Fig. 1; Fig. 3 is a cross-sectional view of the inflator holder along line III-III of Fig. 2; and Fig. 4 is a cross-sectional view of an airbag apparatus.

An inflator 40 is substantially cylindrical shaped and has gas ejection openings 42 provided at one end thereof (on the right side of Fig. 1). An inflator holder 50 has a cylindrical shape surrounding the external periphery of the inflator 40, and according to the embodiment, it has polygonal sections in the longitudinal and vertical directions.

The inflator holder 50 is constructed by punching and pressing a metallic plate to have a predetermined shape, which is then formed to be prism-shaped and then edges of the metallic plate, which are shown on the bottom side of Figs. 1 to 3, are spot-welded together.

The inflator holder 50 is provided with clearance holes 52, 54, 56, and 58 formed on the surface on the topside of Figs. 1 to 3 at intervals in the longitudinal direction. On the surface of the inflator holder 50, shown on the bottom side of Figs. 1 to 3, two bolts are fixed so as to project outwardly.

In a substantially intermediate part in the longitudinal direction of the inflator holder 50, there are provided first and second press parts 62 and 64 formed close to the top surface of the inflator holder 50 while a third press part 66 is formed on the bottom surface. These push pieces 62, 64, and 66 protrude inside the inflator holder 50.

The first and second press parts 62 and 64 are substantially truncated-conical projections and arranged in the vicinity of the end of the clearance hole 56. The first and second press parts 62 and 64 oppose each other interposing the clearance hole 56 therebetween. In addition, both or either of the first and second press parts 62 and 64 may have a convex shape identical to the third press part 66 which will be described as follows.

The third press part 66 is provided as a convex shape extending by a predetermined length in the longitudinal direction of the inflator holder 50. The length of the third press part 66 is substantially the same as the length between the clearance hole 54 and the clearance hole 58. Each of both ends of the third press part 66 in the longitudinal direction has an inclined surface 66a with the height gradually decreasing toward the internal bottom surface of the inflator holder 50. In addition, as the third press part, a plurality of projections may also be provided at intervals in the longitudinal direction of the inflator holder 50.

The edges of the clearance holes 54 and 58 closer to the clearance hole 56 are preferably cut-in slits 54a and 58a extending in the peripheral direction of the inflator holder 50, respectively. These facilitate the vicinities of the first and second press parts 62 and 64 to be outward retracted when the press parts 62 and 64 are pressed by the inflator 40 as will be described.

There are provided extended pieces 70 and 72 formed at the respective both ends of the inflator holder 50. One extended piece 70 extends in the longitudinal direction of the inflator holder 50 and the other extended piece 72 is folded substantially upright toward the center of the end face of the inflator holder 50 before the inflator 40 is inserted.

The inflator 40 is inserted into the inflator holder 50 from the end having the extended piece 70. The leading edge of the inflator 40 reaches the end (the right edge in Fig. 2) of the third press part 66 and then, further reaches the first and second press parts 62 and 64.

An incircle internally touching the first, second, and third press parts 62, 64, and 66 is smaller in diameter than the external periphery of the inflator 40 as shown in Fig 3. Therefore, after the leading edge of the inflator 40 reaches the first and second press parts 62 and 64, the inflator 40 is pushed into the inflator holder 50 pressing the press parts 62, 64, and 66 so as to separate them from each other. The first and second press parts 62 and 64 are located in vicinities of edges of the clearance hole 56, the rigidity thereof is smaller than that of the inflator holder in the vicinity of the third press part 66. Therefore, when the inflator 40 is pushed thereinto, vicinities of the first and second press parts 62 and 64 are mainly retracted by a dimension t shown in Fig. 3 so that the inflator holder 50 is deformed to increase the diameter.

Then, the inflator 40 is pushed thereinto in strong friction with the press parts 62, 64, and 66, and finally the entire inflator 40 is accommodated into the inflator holder 50 when the leading edge of the inflator 40 abuts the extended piece 72 formed at the end of the inflator holder 50. The insertion operation of the inflator 40 is completed by folding the extended piece 70 upright toward the center of the end face of the inflator holder 50.

As shown in Fig. 3, the inflator 40 is fixed inside the inflator holder 50 by pressing only the first, second, and third press parts 62, 64, and 66 against the external periphery of the inflator 40. The inflator 40 touches the inflator holder 50 only at three points of the press parts 62, 64, and 66, which are differently located in the peripheral direction, so that backlashes cannot be produced in the inflator 40. As shown in Fig. 3, the press parts 62, 64, and 66 are arranged so that any of the angles of nip (only the angles of nip on the plane perpendicular to the longitudinal direction) between line segments (not shown) between the center C of the inflator 40 and the respective press parts 62, 64, and 66 is less than 180°.

According to this fixing method of the inflator, a nut and nut fastening operation are not required, so that the parts count is small and the inflator fixing operation is easy. Also, the fixing of the inflator 40 after being inserted into the inflator holder 50 is sufficiently firm.

Fig. 4 is a sectional view of an airbag apparatus having an assembly in which the inflator 40 is held in the inflator holder 50 in such a manner.

An airbag apparatus 80 comprises a casing 82 made of a synthetic resin overall and an airbag 84 accommodated within the casing 82 by being folded. The casing 82 having the inflator 40 and the inflator holder 50 described above comprises a hook 80a for retaining a front openable lid portion and a flexible thin-walled portion (hinge portion) 80b. The inflator 40 and the inflator holder 50 are arranged within the airbag 84, and a bolt 60 penetrating the airbag 84 and the casing 82 protrudes outside the casing 82. The inflator 40, the inflator holder 50, and the airbag 84 are fixed to the casing 82 by fastening the bolt 60 with a nut.

When the inflator 40 is operated, the gas from the gas ejection openings 42 flows into the airbag 84 mainly passing through the clearance hole 52 so as to inflate the airbag 84. The hook 80a of the casing 82 is pressed and disengaged by the gas pressure in the airbag 84 so that the front surface of the casing 82 is crooked along the thin-walled portion 80b and is opened. Thereby, the airbag 84 is extended outside the casing 82 for protecting a human body.

The airbag apparatus 80 shown in Fig. 4 is suitable for a side-airbag apparatus laterally extending along an automobile seat, for example. An inflator and inflator holder assembly having the fixing structure according to the present invention may be applied to various airbag apparatuses such as those for a passenger seat, rear seat, protecting legs, and protecting a head.

The present invention is not limited to the structure shown in the drawings; however, various modifications may be adopted. For example, the inflator 40 according to the embodiment has the gas ejecting openings 42 provided on one end; alternatively, gas ejecting openings may be arranged on both ends or may be arranged along the overall length. Also, the shape of the inflator holder may obviously be other than that shown in the drawings.

### [Advantages]

As described above, according to the present invention, the inflator can be easily and securely fixed to the inflator holder.

## Claims

1. Inflator holder for accommodating and fixing a substantially cylindrical inflator (40),
the inflator holder comprising first, second and third press parts (62, 64, 66) on the internal surface of the inflator holder, the press parts being differently located in the peripheral direction of the inflator (40),
wherein the inflator is pressed against the inflator holder at the first, second, and third press parts (62, 64, 66) from the external periphery so as to fix the inflator (40) thereto,
wherein any of angles of nip between line segments between the inflator center and the respective press parts is less then 180°,
wherein the inflator holder is provided with a first clearance hole (56) and further clearance holes (52,54,58), all of them being formed on the surface at intervals in the longitudinal direction of the inflator holder (50),
wherein the first and the second press parts are formed close to the top surface of the inflator holder with the third press part being formed on the bottom surface,
wherein the first and the second press parts (62, 64) opposing each other are arranged in the vicinity of the end of the first clearance hole (56) interposing the first clearance hole (56) therebetween, **characterized in that** the edges of the further clearance holes (54, 58) closer to the first clearance hole (56) are cut-in slits (54a, 58a) extending in the peripheral direction of the inflator holder (50).

2. Inflator holder according to Claim 1, wherein the first, second, and third press parts (62, 64, 66) protrude from the internal surface of the inflator holder.

3. Inflator holder according to Claim 1 or 2, wherein the inflator holder (50) comprises an extended piece (70) projectingly arranged at the one end,
wherein after the inflator (40) is inserted into the inflator holder (50), the extended piece (70) is bent so as to face one end of the inflator (40).

4. An airbag apparatus comprising:
a folded airbag (84);
an inflator (40) for inflating the airbag (84); and
a casing (82) accommodating the airbag (84) and the inflator (40) therein,
wherein the inflator (40) is fixed into an inflator holder (50) according to Claim 1, and
wherein the inflator holder (50) is fixed to the casing (82).

## Patentansprüche

1. Aufblasvorrichtungshaltevorrichtung zum Unterbringen und Befestigen einer im Wesentlichen zylindrischen Aufblasvorrichtung (40),
wobei die Aufblasvorrichtungshaltevorrichtung erste, zweite und dritte Andrückteile (62, 64, 66) an der Innenoberfläche der Aufblasvorrichtungshaltevorrichtung umfasst, wobei die Andrückteile in der Umfangsrichtung der Aufblasvorrichtung (40) unterschiedlich angeordnet sind,
wobei die Aufblasvorrichtung an den ersten, zweiten und dritten Andrückteilen (62, 64, 66) von dem Außenumfang gegen die Aufblasvorrichtungshaltevorrichtung gedrückt wird, um die Aufblasvorrichtung (40) daran zu befestigen,
wobei jeder der Klemmstellenwinkel zwischen Linienabschnitten zwischen der Aufblasvorrichtungsmitte und den entsprechenden Andrückteilen kleiner als 180° ist,
wobei die Aufblasvorrichtungshaltevorrichtung mit einem ersten Aussparungsloch (56) und weiteren Aussparungslöchern (52, 54, 58) versehen ist, wobei alle von diesen an der Oberfläche in Abständen in der Längsrichtung der Aufblasvorrichtungshaltevorrichtung (50) ausgebildet sind,
wobei die ersten und zweiten Andrückteile nahe zu der oberen Oberfläche der Aufblasvorrichtungshaltevorrichtung ausgebildet sind, wobei das dritte Andrückteil an der unteren Oberfläche ausgebildet ist,
wobei die ersten und zweiten Andrückteile (62, 64) einander gegenüberliegend in der Nähe des Endes des ersten Aussparungslochs (56) angeordnet sind, wobei das erste Aussparungsloch (56) dazwischen angeordnet ist,
**dadurch gekennzeichnet, dass** die Ränder der weiteren Aussparungslöcher (54, 58) näher bei dem ersten Aussparungsloch (56) Einschnittschlitze (54a, 58a) sind, welche sich in der Umfangsrichtung der Aufblasvorrichtungshaltevorrichtung (50) erstrecken.

2. Aufblasvorrichtungshaltevorrichtung nach Anspruch 1, wobei die ersten, zweiten und dritten Andrückteile (62, 64, 66) von der inneren Oberfläche der Aufblasvorrichtungshaltevorrichtung hervorragen.

3. Aufblasvorrichtungshaltevorrichtung nach Anspruch 1 oder 2, wobei die Aufblasvorrichtungshaltevorrichtung (50) ein Erweiterungsteil (70) umfasst, welches an dem einen Ende hervorragend angeordnet ist,
wobei, nachdem die Aufblasvorrichtung (40) in die Aufblasvorrichtungshaltevorrichtung (50) eingesetzt ist, das Erweiterungsteil (70) derart gebogen wird, dass es einem Ende der Aufblasvorrichtung (40) gegenüberliegt.

4. Airbagvorrichtung umfassend:
einen gefaltete Airbag (84);
eine Aufblasvorrichtung (40) zum Aufblasen des Airbags (84); und
ein Gehäuse (82), welches den Airbag (84) und die Aufblasvorrichtung (40) darin aufnimmt,
wobei die Aufblasvorrichtung (40) in eine Aufblasvorrichtungshaltevorrichtung (50) nach Anspruch 1 befestigt ist, und
wobei die Aufblasvorrichtungshaltevorrichtung (50) an dem Gehäuse (82) befestigt ist.

## Revendications

1. Support de gonfleur pour logement et fixation d'un gonfleur (40) sensiblement cylindrique,
le support de gonfleur comprenant des première, deuxième et troisième parties de pressage (62, 64, 66) sur la surface interne du support de gonfleur, les parties de pressage étant placées différemment dans la direction périphérique du gonfleur (40),
dans lequel le gonfleur est pressé contre le support de gonfleur, aux première, deuxième et troisième parties de pressage (62, 64, 66) depuis la périphérie externe, pour fixer sur lui le gonfleur (40),
dans lequel l'un quelconque des angles d'emprise, entre des segments de ligne entre le centre de gonfleur et les parties de pressage respectives, est inférieur à 180°,
dans lequel le support de gonfleur est muni d'un premier trou de passage et d'autres trous de passage (52, 54, 58), tous étant formés sur la surface à des intervalles en direction longitudinale du support de gonfleur (50),
dans lequel la première et la deuxième parties de pressage sont formées à proximité de la surface supérieure du support de gonfleur, la troisième partie de pressage étant formée sur la surface inférieure,
dans lequel les première et deuxième parties de pressage (62, 64), opposées à chaque autre, sont agencées à proximité de l'extrémité du premier trou de passage (56), en interposant le premier trou de passage (56) entre eux, **caractérisé en ce que** les bords des autres trous de passage (54, 58) plus proches du premier trou de passage (56) sont des fentes (54a, 58a) découpées, s'étendant dans la direction périphérique du support de gonfleur (50).

2. Support de gonfleur selon la revendication 1, dans lequel les première, deuxième et troisième parties de pressage (62, 64, 66) font saillie de la surface interne du support de gonfleur.

3. Support de gonfleur selon la revendication 1 ou 2, dans lequel le support de gonfleur (50) comprend une pièce (70), agencée en saillie à une extrémité,
dans lequel, après que le gonfleur (40) ait été inséré dans le support de gonfleur (50), la pièce (70) en saillie est pliée pour être placée face à une extrémité du gonfleur (40).

4. Un coussin de sécurité gonflable, comprenant :
un coussin de sécurité (84) plié ;
un gonfleur (40), pour le gonflage du coussin de sécurité (84) ; et
un bottier (82), recevant en son sein le coussin de sécurité (84) et le gonfleur (40),
dans lequel le gonfleur (40) est fixé sur un support de gonfleur (50) selon al revendication 1, et
dans lequel le support de gonfleur (50) est fixé sur le boîtier (82).
